(19) **Europäisches Patentamt**
**European Patent Office**
**Office européen des brevets**

(11) **EP 3 465 900 B1**

(12) **EUROPEAN PATENT SPECIFICATION**

(45) Date of publication and mention
of the grant of the patent:
**07.12.2022 Bulletin 2022/49**

(21) Application number: **16741651.0**

(22) Date of filing: **01.06.2016**

(51) International Patent Classification (IPC):
**H02P 9/00** *(2006.01)*    **H02P 9/04** *(2006.01)*

(52) Cooperative Patent Classification (CPC):
**H02P 9/006; H02P 9/04**

(86) International application number:
**PCT/FI2016/050387**

(87) International publication number:
**WO 2017/207863 (07.12.2017 Gazette 2017/49)**

(54) **A METHOD, A SYSTEM AND COMPUTER PROGRAM FOR CONTROLLING AN ELECTRIC POWER PLANT**

VERFAHREN, SYSTEM UND COMPUTERPROGRAMM ZUR STEUERUNG EINES KRAFTWERKS

PROCÉDÉ, SYSTÈME ET PROGRAMME INFORMATIQUE DE COMMANDE D'UNE INSTALLATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.04.2019 Bulletin 2019/15**

(73) Proprietor: **Wärtsilä Finland Oy**
**65100 Vaasa (FI)**

(72) Inventors:
• **SAIKKONEN, Ari**
**65100 Vaasa (FI)**
• **NIEMINEN, Kari**
**65100 Vaasa (FI)**

(74) Representative: **Väänänen, Janne Kalervo et al**
**Vanarix**
**Laaksolahdentie 74**
**02730 Espoo (FI)**

(56) References cited:
**EP-A2- 2 704 309    WO-A2-2016/034777**

## Description

### Field of the disclosure

The disclosure relates generally to an electric power plant comprising at least one electric machine and at least one prime mover for operating the electric machine as a generator. More particularly, the disclosure relates to a control system, to a method, and to a computer program for controlling an electric power plant of the kind mentioned above.

### Background

In many cases, an electric power plant for producing electrical energy comprises one or more prime movers arranged to operate one or more electric machines as generators. Each prime mover can be for example a turbine or a piston engine such as e.g. a diesel engine. The operation of the prime mover is typically controlled at least partly on the basis of a speed signal which is indicative of the rotation speed of the prime mover. The above-mentioned speed signal is also indicative of the rotation speed of the generator because the prime mover and the generator are connected to each other directly or via a gear having a known gear ratio. In isolated operation, the control is typically a speed control the aim of which is to keep the rotation speed sufficiently near to its target value, i.e. to keep the frequency of the generator voltage sufficiently close to the target frequency. In parallel operation, the control is typically a power control the aim of which is to keep the mechanical power of the prime mover and thereby the electrical power of the generator sufficiently near to their constant or time dependent target value. The above-mentioned speed signal is typically used also in parallel operation because a change of the rotation speed is indicative of an imbalance between the mechanical power of the prime mover and the electrical power of the generator.

In order to achieve a stable control, disturbances of the speed signal need to be suppressed down to a sufficiently low level. In many cases, the disturbances are suppressed with the aid of a band-stop filter which is tuned to suppress, from the speed signal, an oscillating signal component having a natural frequency of the system comprising the prime mover and the generator. An estimate for the natural frequency can be calculated based on the properties and process parameters of the system. Thereafter, the band-stop filter can be pre-tuned so that its stop-band covers the calculated estimate of the natural frequency. An inherent challenge related to this approach is that the calculated estimate is not necessarily accurate enough and thus it may be necessary to tune the band-stop filter after all elements of the system have been connected together. In practice it would be, however, challenging to arrange one or more specialized persons for tuning the band-stop filter of every power plant being installed.

Publication WO2016034777 describes a voltage control loop that comprises a band-rejection filter having a stopband covering at least partly a frequency area of torsional mode oscillations of a rotating system including a rotor of a synchronous generator. WO2016034777 teaches to compute a frequency spectrum of an amplitude signal indicative of amplitude of voltage of the synchronous generator and to set the band-rejection filter to suppress one or more peaks belonging to a predetermined frequency band of the computed frequency spectrum.

### Summary

The invention is defined by the independent system claim 1, the independent method claim 10 and the independent computer program claim 15.

In accordance with the invention, there is provided a new control system for controlling an electric power plant that comprises:

- at least one electric machine,
- at least one prime mover for operating the electric machine as a generator,
- a signal modifier for suppressing at least one oscillating signal component from a speed signal indicative of the rotation speed of the prime mover, and
- a controller for controlling the prime mover at least partly based on the speed signal from which the at least one oscillating signal component has been suppressed.

A control system according to the invention comprises:

- a frequency detection section for detecting at least one oscillation frequency of the rotation speed in response to a situation in which a torque change excites the rotation speed to oscillate, and

- an adaptation section for adapting the signal modifier to suppress the oscillating signal component so that the frequency of the oscillating signal component is substantially the detected oscillation frequency.

The above-mentioned torque change can be for example a consequence of an event where a breaker between the electrical machine and an external electrical system, e.g. a power grid, is opened or closed. For another example, the torque change can be a consequence of a rapid change of excitation current in a case where the electrical machine is an electrically excited synchronous machine.

The above-mentioned signal modifier can be for example a band-stop filter or a canceller device that is configured to form, with adaptive signal processing means, a cancelling signal and to add the cancelling signal to the speed signal so that the signal power on a frequency area related to the detected oscillation frequency is minimized. The canceller device is more complex than a band-stop filter but, on the other hand, the canceller device does not change the phases of signal components which are not suppressed.

The above-described control system eliminates or at least reduces a need for manual tuning of band stop-filters and/or other signal modifiers in conjunction with installations and/or commissioning of electric power plants of the kind mentioned above.

In a control system according to an exemplifying and non-limiting embodiment of the invention, the frequency detection section is configured to receive a status signal indicative of an open/closed status of a breaker between the electrical machine and an external electrical system and to detect the at least one oscillation frequency in response to a change of the open/closed status of the breaker.

In accordance with the invention, there is provided also a new electric power plant that comprises a control system according to the invention.

In accordance with the invention, there is provided also a new method for controlling an electric power plant of the kind described above. A method according to the invention comprises:

- detecting at least one oscillation frequency of the rotation speed in response to a situation in which a torque change excites the rotation speed to oscillate, and

- adapting the signal modifier, e.g. a band-stop filter, of the electric power plant to suppress the oscillating signal component so that the frequency of the oscillating signal component is substantially the detected oscillation frequency.

In accordance with the invention, there is provided also a new computer program for controlling an electric power plant of the kind described above. A computer program according to the invention comprises computer executable instructions for controlling a programmable processing system to:

- detect at least one oscillation frequency of the rotation speed in response to a situation in which a torque change excites the rotation speed to oscillate, and

- adapt the signal modifier, e.g. a band-stop filter, of the electric power plant to suppress the oscillating signal component so that the frequency of the oscillating signal component is substantially the detected oscillation frequency.

In accordance with the invention, there is provided also a new computer program product. The computer program product comprises a non-volatile computer readable medium, e.g. a compact disc "CD", encoded with a computer program according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of un-recited features. The features recited in dependent claims are mutually freely combinable unless otherwise explicitly stated. Furthermore, it is to be understood that the use of "a" or "an", i.e. a singular form, throughout this document does not exclude a plurality.

**Brief description of the figures**

Exemplifying and non-limiting embodiments of the invention and their advantages are explained in greater detail below in the sense of examples and with reference to the accompanying drawings, in which:

figure 1a illustrates an electric power plant according to an exemplifying and non-limiting embodiment of the invention,

figure 1b shows an exemplifying waveform of rotation speed after a torque change has occurred in the electric power plant illustrated in figure 1a, and

figure 2 is a flowchart of a method according to an exemplifying and non-limiting embodiment of the invention for controlling an electric power plant.

## Description of exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

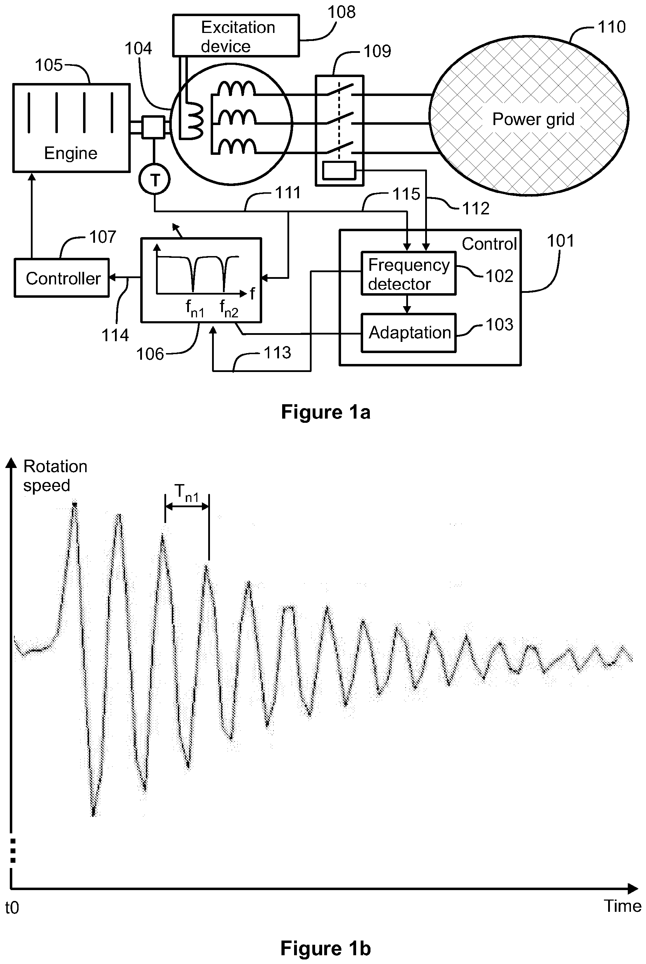

Figure 1a illustrates an electric power plant according to an exemplifying and non-limiting embodiment of the invention. The electric power plant comprises an electric machine 104. In this exemplifying case, the electric machine 104 is an electrically excited synchronous machine. The electric power plant comprises an excitation device 108 for supplying excitation current to the rotor winding of the electric machine 104. The excitation device 108 can be for example a contactless rotating exciter or a slip-ring exciter. The electric power plant comprises a prime mover 105 for operating the electric machine 104 as a generator. The prime mover 105 can be, for example but not necessarily, an internal combustion reciprocating piston engine such as for example a diesel engine. The electric power plant comprises a breaker 109 for electrically connecting the electric machine 104 to an external electric system 110 that can be for example a power grid. The electric power plant comprises a signal modifier 106 for suppressing one or more oscillating signal components from a speed signal 111 that is indicative of the rotation speed of the prime mover 105. The speed signal 111 is also indicative of the rotation speed of the electrical machine 104. In this exemplifying case, the speed signal 111 is an output signal of a speed sensor connected to the shaft of the prime mover 105. The electric power plant comprises a controller 107 for controlling the prime mover 105 at least partly based on the speed signal from which the one or more oscillating signal components have been suppressed. In this exemplifying case, the signal modifier 106 is a band-stop filter for realizing one or more stop-bands at desired center frequencies. In an exemplifying situation shown in figure 1a, the signal modifier 106 is adapted to realize one stop-band at a center frequency $f_{n1}$ and another stop-band at a center frequency $f_{n2}$. In figure 1a, the speed signal from which the one or more oscillating signal components have been suppressed is denoted with a reference 114.

The electric power plant comprises a control system 101 according to an exemplifying and non-limiting embodiment of the invention for adapting the signal modifier 106. The control system 101 comprises a frequency detection section 102 for detecting one or more oscillation frequencies of the rotation speed in response to a situation in which a torque change excites the rotation speed to oscillate. It is worth noting that the output of the frequency detection section 102 may express each detected oscillation frequency in terms of cycles per a time unit e.g. in Hz, or in terms of a duration of a cycle e.g. seconds, or in some other way which explicitly or implicitly, directly or indirectly expresses the detected oscillation frequency under consideration. The control system 101 comprises an adaptation section 103 for adapting the signal modifier 106 to suppress, from the speed signal 111, one or more oscillating signal components corresponding to the one or more detected oscillation frequencies so that the frequency of each oscillating signal component being suppressed is one of the detected oscillation frequencies.

In the exemplifying power plant illustrated in figure 1a, an input signal 115 of the frequency detection section 102 is the speed signal 111. It is however also possible that the frequency detection section 102 is configured to detect the one or more oscillation frequencies of the rotation speed indirectly so that the input signal 115 of the frequency detection section 102 is a signal indicative of the fuel demand of the prime mover 105, a signal indicative of the load of the prime mover, or some other signal which is responsive to oscillations of the rotation speed. Furthermore, it is also possible that the frequency detection section 102 is configured to detect the one or more oscillation frequencies based on two or more different signals in order to improve the reliability and accuracy of the detection. In a case where the input signal 115 is an analog signal and the frequency detection section 102 and the adaptation section 103 are digital devices, the control system 101 further comprises an analog-to-digital converter "ADC".

Figure 1b shows an exemplifying waveform of the rotation speed in an exemplifying situation in which a torque change takes place at a time instant t0. The torque change can be for example a consequence of an event where the breaker 109 is opened or closed. As can be seen from figure 1b, the rotation speed comprises a decaying oscillating signal component whose period is $T_{n1}$. Thus, one of the natural frequencies is $1/T_{n1}$. In this exemplifying situation, the adaptation section 103 adapts the signal modifier 106 to suppress an oscillating signal component whose frequency is $1/T_{n1}$, i.e. the center frequency $f_{n1}$ can be substantially the $1/T_{n1}$. The other stop-band at the center frequency $f_{n2}$ is not necessarily realized.

In a control system according to an exemplifying and non-limiting embodiment of the invention, the frequency detection section 102 is configured to search local maxima or local minima of the input signal 115 and compute an estimate for the period $T_{n1}$ between adjacent ones of the local maxima or local minima. Furthermore, the frequency detection section 102 can be configured to form the inverse $1/T_{n1}$ of the period $T_{n1}$.

In a control system according to an exemplifying and non-limiting embodiment of the invention, the frequency detection section 102 is configured to compute a frequency spectrum of the input signal 115 and to search peaks from the computed frequency spectrum. Each peak found on the computed frequency spectrum represents one detected oscillation frequency of the rotation speed. The computed frequency spectrum can be for example a Discrete Fourier Transform "DFT" of the input signal 115. The Discrete Fourier Transform "DFT" can be e.g. the Fast Fourier Transform "FFT". Concerning each peak found on the computed frequency spectrum, the signal modifier 106 can be adapted to suppress an oscillating signal component whose frequency is substantially the frequency of the peak under consideration. Thus, the frequency detection section 102 can be configured to determine not only the frequency or frequencies of the one or more oscillating signal components to be suppressed but also the number of the one or more oscillating signal components to be suppressed.

In exemplifying cases where the signal modifier 106 is a band-stop filter, the adaptation section 103 can be configured to determine one or more filter parameters of the signal modifier 106 so that the amplitude response of the signal modifier 106 has one or more stop-bands substantially at the one or more oscillation frequencies detected by the frequency detection section 102. The signal modifier 106 can be for example an infinite impulse response "IIR" filter whose transfer function may comprise for example the following quotient-form factor for producing a stop-band at the center frequency $f_{n1}$:

$$(1 - e^{j2\pi fn1T} z^{-1}) / (1 - R_p e^{j2\pi fn1T} z^{-1}), \qquad (1)$$

where e is the Napier's constant, j is the imaginary unit, T is the sample interval, $R_p$ is a pole radius, and $z^{-1}$ means a delay of one sample interval. The pole radius $R_p$ can be used for shaping the amplitude response so that the amplitude response gets sharper at the vicinity of the stop-band when the pole radius $R_p$ approaches one from downwards, i.e. the pole approaches the unit circle. In this exemplifying case, the adaptation section 103 may determine for example the filter parameter $e^{j2\pi fn1T} = \cos(2\pi f_{n1}T) + j \sin(2\pi f_{n1}T)$ after the frequency detection section 102 has detected the frequency value $f_{n1}$.

In a control system 101 according to an exemplifying and non-limiting embodiment of the invention, the frequency detection section 102 is configured to receive a status signal 112 indicative of the open/closed status of the breaker 109. The frequency detection section 102 is configured detect the one or more oscillation frequencies from the input signal 115 in response to a change of the open/closed status of the breaker. In this exemplifying case, a change of the status signal 112 activates the frequency detection section 102 to detect the one or more oscillation frequencies.

In a control system 101 according to an exemplifying and non-limiting embodiment of the invention, the frequency detection section 102 is configured to keep the signal modifier 106 in a disabled state when the one or more oscillation frequencies are detected. In the disabled state, the signal modifier 106 does not suppress any components of the speed signal 111 and thus the signal modifier 106 does not prevent the natural frequencies from appearing in the input signal of the frequency detection section 102. In figure 1a, a signal for keeping the signal modifier 106 in the disabled state is denoted with a reference 113.

The implementation of the above-described frequency detection section 102 and the adaptation section 103 can be based on one or more digital signal processing "DSP" circuits, one or more analogue circuits, or a combination thereof. Each digital signal processing circuit can be implemented with one or more processor circuits, each of which can be a programmable processor circuit provided with appropriate software, a dedicated hardware processor such as for example an application specific integrated circuit "ASIC", or a configurable hardware processor such as for example a field programmable gate array "FPGA". Furthermore, the frequency detection section 102 and/or the adaptation section 103 may comprise one or more memory devices such as e.g. random access memory "RAM" circuits.

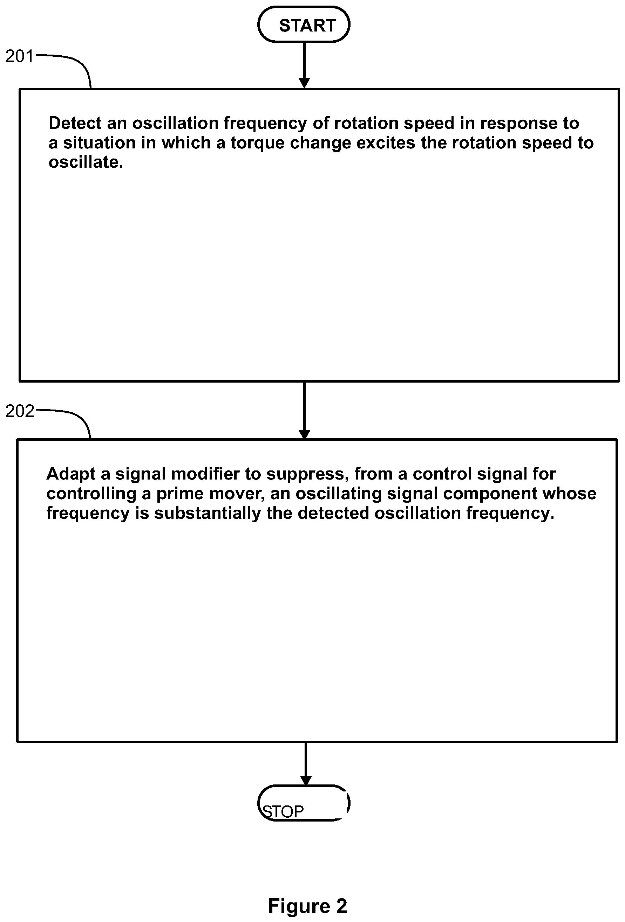

Figure 2 shows a flowchart of a method according to an exemplifying and non-limiting embodiment of the invention for controlling an electric power plant that comprises:

- at least one electric machine,
- at least one prime mover for operating the electric machine as a generator,
- a signal modifier for suppressing at least one oscillating signal component from a speed signal indicative of the rotation speed of the prime mover,
- a controller for controlling the prime mover at least partly based on the speed signal from which the at least one oscillating signal component has been suppressed.

The method comprises the following actions:

- action 201: detecting at least one oscillation frequency of the rotation speed in response to a situation in which a torque change excites the rotation speed to oscillate, and

- action 202: adapting the signal modifier to suppress the oscillating signal component so that the frequency of the oscillating signal component is substantially the detected oscillation frequency.

**Claims**

1. A control system (101) for controlling an electrical power plant that comprises:

   - at least one electric machine,
   - at least one prime mover for operating the electric machine as a generator,
   - a signal modifier for suppressing at least one oscillating signal component from a speed signal indicative of rotation speed of the prime mover, and
   - a controller for controlling the prime mover at least partly based on the speed signal from which the at least one oscillating signal component has been suppressed,

   **characterized in that** the control system comprises:

   - a frequency detection section (102) for detecting at least one oscillation frequency of the rotation speed in response to a situation in which a torque change excites the rotation speed to oscillate, and
   - an adaptation section (103) for adapting the signal modifier to suppress the oscillating signal component so that frequency of the oscillating signal component is substantially the detected oscillation frequency.

2. A control system according to claim 1, wherein the frequency detection section is configured to receive a status signal indicative of a status of a breaker between the electric machine and an external electric system and to detect the at least one oscillation frequency in response to a change of the status of the breaker.

3. A control system according to claim 1 or 2, wherein the frequency detection section is configured to detect the at least one oscillation frequency based on one or more signals indicative of one or more of the following: a measured value of the rotation speed, fuel demand of the prime mover, load of the prime mover.

4. A control system according to any of claims 1-3, wherein the adaptation section is configured to determine one or more filter parameters of the signal modifier of the electrical power plant in accordance with the at least one detected oscillation frequency so that an amplitude response of the signal modifier has a stop-band at the at least one detected oscillation frequency.

5. An electric power plant comprising:

   - at least one electric machine (104),
   - at least one prime mover (105) for operating the electric machine as a generator,
   - a signal modifier (106) for suppressing at least one oscillating signal component from a speed signal indicative of rotation speed of the prime mover,
   - a controller (107) for controlling the prime mover at least partly based on the speed signal from which the at least one oscillating signal component has been suppressed, and
   - a control system (101) according to any of claims 1-4 for controlling the electric power plant.

6. An electric power plant according to claim 5, wherein the electric machine is a synchronous machine.

7. An electric power plant according to claim 6, wherein the synchronous machine is an electrically excited synchronous machine.

8. An electric power plant according to any of claims 5-7, wherein the prime mover is an internal combustion reciprocating piston engine.

9. An electric power plant according to any of claims 5-8, wherein the signal modifier is an adaptable band-stop filter.

10. A method for controlling an electric power plant that comprises:

- at least one electric machine,
- at least one prime mover for operating the electric machine as a generator,
- a signal modifier for suppressing at least one oscillating signal component from a speed signal indicative of rotation speed of the prime mover, and
- a controller for controlling the prime mover at least partly based on the speed signal from which the at least one oscillating signal component has been suppressed,

**characterized in that** the method comprises:

- detecting (201) at least one oscillation frequency of the rotation speed in response to a situation in which a torque change excites the rotation speed to oscillate, and
- adapting (202) the signal modifier to suppress the oscillating signal component so that frequency of the oscillating signal component is substantially the detected oscillation frequency.

11. A method according to claim 10, wherein the method comprises receiving a status signal indicative of a status of a breaker between the electric machine and an external electric system and detecting the at least one oscillation frequency in response to a change of the status of the breaker.

12. A method according to claim 10 or 11, wherein the at least one oscillation frequency is detected based on one or more signals indicative of one or more of the following: a measured value of the rotation speed, fuel demand of the prime mover, load of the prime mover.

13. A method according to any of claims 10-12, wherein the signal modifier is an adaptable band-stop filter.

14. A method according to claim 13, wherein the method comprises determining one or more filter parameters of the adaptable band-stop filter in accordance with the at least one detected oscillation frequency.

15. A computer program for controlling an electric power plant that comprises:

- at least one electric machine,
- at least one prime mover for operating the electric machine as a generator,
- a signal modifier for suppressing at least one oscillating signal component from a speed signal indicative of rotation speed of the prime mover, and
- a controller for controlling the prime mover at least partly based on the speed signal from which the at least one oscillating signal component has been suppressed,

**characterized in that** the computer program comprises computer executable instructions for controlling a programmable processing system to:

- detect at least one oscillation frequency of the rotation speed in response to a situation in which a torque change excites the rotation speed to oscillate, and
- adapt the signal modifier to suppress the oscillating signal component so that frequency of the oscillating signal component is substantially the detected oscillation frequency.

**Patentansprüche**

1. Steuersystem (101) zum Steuern eines elektrischen Kraftwerks, umfassend:

- mindestens eine elektrische Maschine,
- mindestens eine Antriebsmaschine zum Betreiben der elektrischen Maschine als ein Generator,
- einen Signalmodifikator zum Unterdrücken mindestens einer oszillierenden Signalkomponente aus einem Drehzahlsignal, das die Drehzahl der Antriebsmaschine angibt, und
- eine Steuervorrichtung zum Steuern der Antriebsmaschine mindestens teilweise basierend auf dem Drehzahlsignal, aus dem die mindestens eine oszillierenden Signalkomponente unterdrückt wurde,

**dadurch gekennzeichnet, dass** das Steuersystem Folgendes umfasst:

- einen Frequenzerfassungsteilabschnitt (102) zum Erfassen mindestens einer Oszillationsfrequenz der Drehzahl als Reaktion auf eine Situation, in der eine Drehmomentänderung die Drehzahl zum Oszillieren erregt, und
- einen Anpassungsteilabschnitt (103) zum Anpassen des Signalmodifikators zum Unterdrücken der oszillierenden Signalkomponente derart, dass Frequenz der oszillierenden Signalkomponente im Wesentlichen die erfasste Oszillationsfrequenz ist.

2.  Steuersystem nach Anspruch 1, wobei der Frequenzerfassungsteilabschnitt dazu konfiguriert ist, ein Zustandssignal zu empfangen, das einen Zustand eines Unterbrechers zwischen der elektrischen Maschine und einem externen elektrischen System angibt, und die mindestens eine Oszillationsfrequenz als Reaktion auf eine Zustandsänderung des Unterbrechers zu erfassen.

3.  Steuersystem nach Anspruch 1 oder 2, wobei der Frequenzerfassungsteilabschnitt dazu konfiguriert ist, die mindestens eine Oszillationsfrequenz basierend auf einem oder mehreren Signalen, die eines oder mehrere der Folgenden angeben, zu erfassen: einen Messwert der Drehzahl, Kraftstoffnachfrage der Antriebsmaschine, Last der Antriebsmaschine.

4.  Steuersystem nach einem der Ansprüche 1-3, wobei der Anpassungsteilabschnitt dazu konfiguriert ist, einen oder mehrere Filterparameter des Signalmodifikators des elektrischen Kraftwerks gemäß der mindestens einen erfassten Oszillationsfrequenz derart zu ändern, dass ein Amplitudengang des Signalmodifikators einen Sperrbereich an der mindestens einen erfassten Oszillationsfrequenz aufweist.

5.  Elektrisches Kraftwerk, umfassend:

    - mindestens eine elektrische Maschine (104),
    - mindestens eine Antriebsmaschine (105) zum Betreiben der elektrischen Maschine als ein Generator,
    - einen Signalmodifikator (106) zum Unterdrücken mindestens einer oszillierenden Signalkomponente aus einem Drehzahlsignal, das die Drehzahl der Antriebsmaschine angibt,
    - eine Steuervorrichtung (107) zum Steuern der Antriebsmaschine mindestens teilweise basierend auf dem Drehzahlsignal, aus dem die mindestens eine oszillierenden Signalkomponente unterdrückt wurde, und
    - ein Steuersystem (101) nach einem der Ansprüche 1 bis 4 zum Steuern der elektrischen Kraftwerks.

6.  Elektrisches Kraftwerk nach Anspruch 5, wobei die elektrische Maschine eine Synchronmaschine ist.

7.  Elektrisches Kraftwerk nach Anspruch 6, wobei die Synchronmaschine eine elektrisch erregte Synchronmaschine ist.

8.  Elektrisches Kraftwerk nach einem der Ansprüche 5-7, wobei die Antriebsmaschine ein Verbrennungskolbenmotor ist.

9.  Elektrisches Kraftwerk nach einem der Ansprüche 5-8, wobei der Signalmodifikator eine anpassbare Bandsperre ist.

10. Verfahren zum Steuern eines elektrischen Kraftwerks, umfassend:

    - mindestens eine elektrische Maschine,
    - mindestens eine Antriebsmaschine zum Betreiben der elektrischen Maschine als ein Generator,
    - einen Signalmodifikator zum Unterdrücken mindestens einer oszillierenden Signalkomponente aus einem Drehzahlsignal, das die Drehzahl der Antriebsmaschine angibt, und
    - eine Steuervorrichtung zum Steuern der Antriebsmaschine mindestens teilweise basierend auf dem Drehzahlsignal, aus dem die mindestens eine oszillierenden Signalkomponente unterdrückt wurde,

    **dadurch gekennzeichnet, dass** das Verfahren umfasst:

    - Erfassen (201) mindestens einer Oszillationsfrequenz der Drehzahl als Reaktion auf eine Situation, in der eine Drehmomentänderung die Drehzahl zum Oszillieren erregt, und
    - Anpassen (202) des Signalmodifikators zum Unterdrücken der oszillierenden Signalkomponente derart, dass Frequenz der oszillierenden Signalkomponente im Wesentlichen die erfasste Oszillationsfrequenz ist.

11. Verfahren nach Anspruch 10, wobei das Verfahren das Empfangen eines Zustandssignals umfasst, das einen Zustand eines Unterbrechers zwischen der elektrischen Maschine und einem externen elektrischen System angibt, und Erfassen der mindestens einen Oszillationsfrequenz als Reaktion auf eine Zustandsänderung des Unterbrechers.

12. Verfahren nach Anspruch 10 oder 11, wobei die mindestens eine Oszillationsfrequenz basierend auf einem oder mehreren Signalen erfasst wird, die eines oder mehrere der folgenden angeben: einen Messwert der Drehzahl, Kraftstoffnachfrage der Antriebsmaschine, Last der Antriebsmaschine.

13. Verfahren nach einem der Ansprüche 10-12, wobei der Signalmodifikator eine anpassbare Bandsperre ist.

14. Verfahren nach Anspruch 13, wobei das Verfahren das Bestimmen eines oder mehrerer Filterparameter der anpassbare Bandsperre gemäß der mindestens einen erfassten Oszillationsfrequenz umfasst.

15. Computerprogramm zum Steuern eines elektrischen Kraftwerks, umfassend:

- mindestens eine elektrische Maschine,
- mindestens eine Antriebsmaschine zum Betreiben der elektrischen Maschine als ein Generator,
- einen Signalmodifikator zum Unterdrücken mindestens einer oszillierenden Signalkomponente aus einem Drehzahlsignal, das die Drehzahl der Antriebsmaschine angibt, und
- eine Steuervorrichtung zum Steuern der Antriebsmaschine mindestens teilweise basierend auf dem Drehzahlsignal, aus dem die mindestens eine oszillierenden Signalkomponente unterdrückt wurde,

**dadurch gekennzeichnet, dass** das Computerprogramm computerausführbare Anweisungen zum Steuern eines programmierbaren Verarbeitungssystems umfasst zum:

- Erfassen einer Oszillationsfrequenz der Drehzahl als Reaktion auf eine Situation, in der eine Drehmomentänderung die Drehzahl zum Oszillieren erregt, und
- Anpassen des Signalmodifikators zum Unterdrücken der oszillierenden Signalkomponente derart, dass Frequenz der oszillierenden Signalkomponente im Wesentlichen die erfasste Oszillationsfrequenz ist.

**Revendications**

1. Système de commande (101) pour commander une centrale électrique qui comprend :

- au moins une machine électrique,
- au moins une machine motrice pour faire fonctionner la machine électrique comme une génératrice,
- un modificateur de signal pour supprimer au moins une composante de signal oscillant à partir d'un signal de vitesse indicatif de la vitesse de rotation du moteur principal, et
- un contrôleur pour commander le moteur principal au moins partiellement sur la base du signal de vitesse à partir duquel la au moins une composante de signal oscillant a été supprimée,

**caractérisé en ce que** le système de commande comprend :

- une section de détection de fréquence (102) pour détecter au moins une fréquence d'oscillation de la vitesse de rotation en réponse à une situation dans laquelle un changement de couple excite la vitesse de rotation pour qu'elle oscille, et
- une section d'adaptation (103) pour adapter le modificateur de signal pour supprimer la composante de signal oscillant de sorte que la fréquence de la composante de signal oscillant soit sensiblement la fréquence d'oscillation détectée.

2. Système de commande selon la revendication 1, dans lequel la section de détection de fréquence est configurée pour recevoir un signal d'état indicatif d'un état d'un disjoncteur entre la machine électrique et un système électrique externe et pour détecter la au moins une fréquence d'oscillation en réponse à un changement d'état du disjoncteur.

3. Système de commande selon la revendication 1 ou 2, dans lequel la section de détection de fréquence est configurée pour détecter la au moins une fréquence d'oscillation sur la base d'un ou plusieurs signaux indicatifs d'un ou plusieurs des éléments suivants : une valeur mesurée de la vitesse de rotation, une demande de carburant du moteur principal, une charge du moteur principal.

4.  Système de commande selon une quelconque des revendications 1 à 3, dans lequel la section d'adaptation est configurée pour déterminer un ou plusieurs paramètres de filtre du modificateur de signal de la centrale électrique en fonction de la au moins une fréquence d'oscillation détectée de sorte qu'une réponse en amplitude du modificateur de signal comporte une bande d'arrêt à au moins une fréquence d'oscillation détectée.

5.  Centrale électrique comprenant :

    - au moins une machine électrique (104),
    - au moins une machine motrice (105) pour faire fonctionner la machine électrique comme une génératrice,
    - un modificateur de signal (106) pour supprimer au moins une composante de signal oscillant d'un signal de vitesse indicatif de la vitesse de rotation du moteur principal,
    - un contrôleur (107) pour commander le moteur principal au moins partiellement sur la base du signal de vitesse à partir duquel la au moins une composante de signal oscillant a été supprimée, et
    - un système de commande (101) selon une quelconque des revendications 1 à 4 pour commander la centrale électrique.

6.  Centrale électrique selon la revendication 5, dans laquelle la machine électrique est une machine synchrone.

7.  Centrale électrique selon la revendication 6, dans laquelle la machine synchrone est une machine synchrone à excitation électrique.

8.  Centrale électrique selon une quelconque des revendications 5 à 7, dans laquelle le moteur principal est un moteur à piston alternatif à combustion interne.

9.  Centrale électrique selon une quelconque des revendications 5 à 8, dans laquelle le modificateur de signal est un filtre coupe-bande adaptable.

10. Procédé de contrôle d'une centrale électrique comprenant :

    - au moins une machine électrique
    - au moins une machine motrice pour faire fonctionner la machine électrique en générateur,
    - un modificateur de signal pour supprimer au moins une composante de signal oscillant d'un signal de vitesse indicatif de la vitesse de rotation du moteur principal, et
    - un contrôleur pour commander le moteur principal au moins partiellement sur la base du signal de vitesse à partir duquel la au moins une composante de signal oscillant a été supprimée,

    **caractérisé en ce que** le procédé comprend de :

    - détecter (201) au moins une fréquence d'oscillation de la vitesse de rotation en réponse à une situation dans laquelle un changement de couple excite la vitesse de rotation pour qu'elle oscille, et
    - adapter (202) le modificateur de signal pour supprimer la composante de signal oscillant de sorte que la fréquence de la composante de signal oscillant soit sensiblement la fréquence d'oscillation détectée.

11. Procédé selon la revendication 10, dans lequel le procédé comprend la réception d'un signal d'état indicatif d'un état d'un disjoncteur entre la machine électrique et un système électrique externe et la détection de la au moins une fréquence d'oscillation en réponse à un changement de l'état du disjoncteur.

12. Procédé selon la revendication 10 ou 11, dans lequel la au moins une fréquence d'oscillation est détectée sur la base d'un ou plusieurs signaux indicatifs d'un ou plusieurs des éléments suivants : une valeur mesurée de la vitesse de rotation, la demande de carburant du moteur principal, la charge du moteur principal.

13. Procédé selon une quelconque des revendications 10 à 12, dans lequel le modificateur de signal est un filtre coupe-bande adaptable.

14. Procédé selon la revendication 13, dans lequel le procédé comprend la détermination d'un ou plusieurs paramètres de filtre du filtre coupe-bande adaptable en fonction de la au moins une fréquence d'oscillation détectée.

15. Programme informatique pour commander une centrale électrique comprenant :

- au moins une machine électrique
- au moins une machine motrice pour faire fonctionner la machine électrique comme une génératrice,
- un modificateur de signal pour supprimer au moins une composante de signal oscillant d'un signal de vitesse indicatif de la vitesse de rotation du moteur principal, et
- un contrôleur pour commander le moteur principal au moins partiellement sur la base du signal de vitesse à partir duquel la au moins une composante de signal oscillant a été supprimée,

**caractérisé en ce que** le programme informatique comprend des instructions exécutables par ordinateur pour commander un système de traitement programmable pour :

- détecter au moins une fréquence d'oscillation de la vitesse de rotation en réponse à une situation dans laquelle un changement de couple excite la vitesse de rotation pour qu'elle oscille, et
- adapter le modificateur de signal pour supprimer la composante de signal oscillant de sorte que la fréquence de la composante de signal oscillant soit sensiblement la fréquence d'oscillation détectée.

**Figure 1a**

**Figure 1b**

START

201

Detect an oscillation frequency of rotation speed in response to a situation in which a torque change excites the rotation speed to oscillate.

202

Adapt a signal modifier to suppress, from a control signal for controlling a prime mover, an oscillating signal component whose frequency is substantially the detected oscillation frequency.

STOP

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016034777 A